(19) Europäisches Patentamt
European Patent Office
Office européen des brevets

(11) **EP 3 173 989 A1**

(12) **EUROPEAN PATENT APPLICATION**

(43) Date of publication:
**31.05.2017 Bulletin 2017/22**

(51) Int Cl.:
***G06Q 10/04*** *(2012.01)*    ***G06Q 10/00*** *(2012.01)*

(21) Application number: **16001226.6**

(22) Date of filing: **31.05.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.11.2015 TW 104139734
29.12.2015 TW 104144279
31.12.2015 TW 104144716**

(71) Applicant: **Flytech Technology Co., Ltd.
Taipei City 114 (TW)**

(72) Inventors:
• **LAM, Tai-Seng
114 Taipei City (TW)**
• **LIN, Chiung-Chi
114 Taipei City (TW)**

(74) Representative: **Zeitler Volpert Kandlbinder
Patent- und Rechtsanwälte Partnerschaft mbB
Herrnstrasse 44
80539 München (DE)**

(54) **SYSTEM FOR CALCULATING LIFE PERCENTAGE OF ELECTRONIC DEVICE**

(57) A method for calculating a life percentage of an electronic device is provided. Firstly, a history data of the electronic device is read. The history data contains an expected life, a spent usage time and a decay coefficient of the electronic device. Then, a life percentage value of the electronic device is generated according to the history data. Then, a residual usage time of the electronic device is calculated according to the life percentage value. Since the life percentage value is obtained according to the history data, the residual usage time of the electronic device can be calculated more accurately.

FIG.1

EP 3 173 989 A1

**Description**

FIELD OF THE INVENTION

The present invention relates to a method for calculating a life percentage of an electronic device, and more particularly to a system for accurately calculating a residual usage time of an electronic device.

BACKGROUND OF THE INVENTION

With the popularity of the selling system in business, electronic devices of a point-of-sale (POS) system are used in various stores or business to manage goods purchase, goods sale, good return, fees and other information. For example, electronic devices of the POS system include a host, a monitor, a printer, and so on. In case that the electronic device needs to be replaced, the user usually notifies the engineer of the original factory to replace the components of the electronic device after the electronic device cannot be used.

For example, the electronic device for the POS system is an important business tool in the store or the business place. If the electronic device is abnormal and the abnormal situation fails to be eliminated in advance or immediately, the selling process is not smooth. Under this circumstance, the business loss increases. Therefore, it is important for the user to realize the life status of the electronic device.

Conventionally, the expected life of the electronic device is calculated according to the expected lives of the electronic components contained in the electronic device (e.g. the basic life of a battery) and the environmental conditions of the factory where the electronic components are manufactured. In fact, the use life of the electronic device is dependent on the use habit of the user, the use conditions and the operating cycles of different electronic components. Consequently, the expected life of the electronic device obtained by the conventional technology cannot be used to accurately provide the residual usage time of the electronic device.

SUMMARY OF THE INVENTION

For solving the drawbacks of the conventional technologies, the present invention relates to a method for calculating a life percentage of an electronic device in order to accurately calculate a residual usage time of the electronic device.

In accordance with an aspect of the present invention, there is provided a method for calculating a life percentage of an electronic device. The electronic device has a history data. The method includes the following steps. Firstly, the history data is read, and a life percentage value of the electronic device is generated according to the history data. The history data contains an expected life, a spent usage time and a decay coefficient of the electronic device. Then, a residual usage time of the electronic device is calculated according to the life percentage value.

Preferably, in the step (A), the history data is read by an intelligent device that is in communication with the electronic device. When an application program installed in the intelligent device is executed, the life percentage value is obtained according to the expected life, the spent usage time and the decay coefficient, and the residual usage time of the electronic device is calculated.

In an embodiment, the history data is stored in a history parameter table of the intelligent device.

In an embodiment, the intelligent device reads the history data of the electronic device at regular time and updates the history parameter table with the read history data; or after the history data of the electronic device is updated, the intelligent device updates the history parameter table according to the updated history data.

In an embodiment, after the history parameter table is updated, the intelligent device re-calculates the life percentage value of the electronic device according to the updated history parameter table, so that the residual usage time of the electronic device is updated.

In an embodiment, the life percentage value, the spent usage time, the decay coefficient and the expected life comply with a mathematic formula:

$$Life \quad percentage \quad value = \sum_1^n \frac{spent \quad usage \quad time \times decay \quad coefficient}{\exp ected \quad lief} ,$$

wherein n is a number of times the history parameter table has been updated.

In an embodiment, the residual usage time and the life percentage value comply with a mathematic formula:

$$\text{Residual usage time} = (1 - \text{life percentage value}) \times \text{expected life}$$

In an embodiment, the decay coefficient is determined according to an operating temperature of the electronic device, an ambient temperature, an ambient humidity and/or a setting parameter of the electronic device.

In an embodiment, the expected life is an expected use life when the electronic device leaves the factory.

In an embodiment, the electronic device is the motherboard, and the spent usage time is a power-on time length of the motherboard. The decay coefficient is determined according to an operating temperature of the motherboard, an ambient temperature of the motherboard and/or a setting parameter of the motherboard. The setting parameter of the motherboard includes a voltage stability or a material conduction parameter.

In an embodiment, the electronic device is the monitor, and the spent usage time is a power-on time length of the monitor. The decay coefficient is determined according to an operating temperature of the monitor and/or a setting parameter of the monitor. The setting parameter of the monitor includes a cumulative click number of the monitor, a brightness value, a power consumption amount of the monitor, a material of the monitor or a response time.

In an embodiment, the electronic device is the hard disk drive, and the spent usage time is a power-on time length of the hard disk drive. The decay coefficient is determined according to an operating temperature of the hard disk drive and/or a setting parameter of the hard disk drive. The setting parameter of the hard disk drive includes a hard disk rotation speed, a number of times the hard disk drive is access or a power consumption amount.

In an embodiment, the electronic device is a printer, and the spent usage time is a power-on time length of the printer. The decay coefficient is determined according to an operating temperature of the printer and/or a setting parameter of the printer. The setting parameter of the printer includes a voltage specification, a printing speed, a sensor usage time or a paper thickness.

In an embodiment, the electronic device is a power supply, and the spent usage time is a power-on time length of the power supply. The decay coefficient is determined according to an operating temperature of the power supply and/or the setting parameter of the power supply. The setting parameter of the power supply includes a capacitor material specification of the power supply.

From the above descriptions, the present invention provides a method for calculating a life percentage of an electronic device. An intelligent device reads a history data of the electronic device, and calculates a life percentage value corresponding to the electronic device according to the history data. Consequently, a residual usage time of the electronic device can be acquired more accurately. Moreover, since the life percentage value is determined according to the decay coefficient of the electronic device, the important factor influencing the use life of the electronic device is taken into consideration. Consequently, the method of the present invention can facilitate the user to realize the residual usage time of the electronic device more accurately and can modify and update the residual usage time according to the decay coefficient of the electronic device at any time.

The above objects and advantages of the present invention will become more readily apparent to those ordinarily skilled in the art after reviewing the following detailed description and accompanying drawings, in which:

BRIEF DESCRIPTION OF THE DRAWINGS

FIG. 1 schematically illustrates the architecture of a selling system according to an embodiment of the present invention;
FIG. 2 is a schematic functional block diagram illustrating a power supply of the system of FIG. 1;
FIG. 3 is a flowchart illustrating a method for calculating the life percentage of the power supply; and
FIG. 4 is a plot illustrating the relationship between the temperature and the decay coefficient of the power supply.

DETAILED DESCRIPTION OF THE PREFERRED EMBODIMENT

The present invention will now be described more specifically with reference to the following embodiments and accompanying drawings.

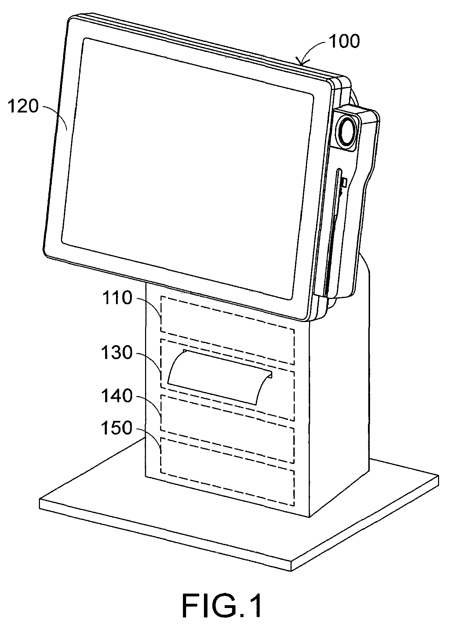

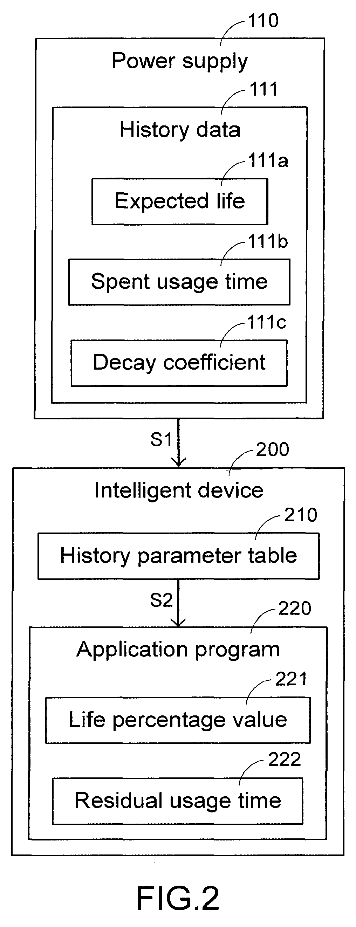

FIG. 1 schematically illustrates the architecture of a selling system according to an embodiment of the present invention. FIG. 2 is a schematic functional block diagram illustrating a power supply of the system of FIG. 1.

As shown in FIGS. 1 and 2, the selling system 100 comprises plural electronic devices. These electronic devices include a power supply 110, a monitor 120, a printer 130, a motherboard 140 and a hard disk drive 150. The power supply 110 is used to provide electricity that is required for the operation of the selling system. The monitor 120 is used for displaying the data image of the selling system 100. The printer 130 is used for generating the print data of the selling system 100. The hard disk drive 150 is used for storing the data of the selling system 100. In the selling system 100, each electronic device has its own history data. In accordance with the conventional technology, the history data of the electronic device of the selling system includes the information about the product serial number, the expected life, the maintenance record, the operating temperature and at least one setting parameter of the electronic device.

For describing the method for calculating the life percentage of the electronic device according to the present invention, the power supply 110 will be taken as an example of the electronic device. As shown in FIG. 2, the power supply 110 comprises a history data 111. The contents of the history data 111 are distinguished from the contents of the history data of the conventional technology. In addition to the contents of the history data of the conventional technology, the history data 111 of the power supply 110 further contains a spent usage time 111 b and a decay coefficient 111 c of the power supply 110. Moreover, an intelligent device 200 is used for calculating a residual usage time 222 of the power supply 110.

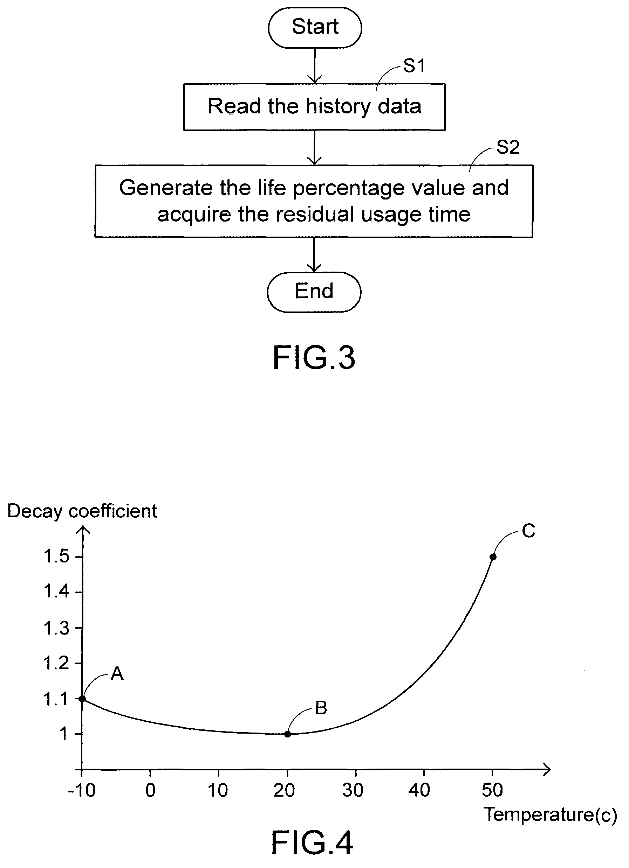

Hereinafter, a method for calculating the life percentage of the power supply will be illustrated with reference to FIG. 3. FIG. 3 is a flowchart illustrating a method for calculating the life percentage of the power supply. Please refer to FIGS. 2 and 3. Firstly, in a step S1, an application program 220 of the intelligent device 200 is executed to read the history data 111 of the power supply 110. Then, in a step S2, the expected life 111 a, the spent usage time 111 b and the decay coefficient 111 c of the history data 111 are stored in a history parameter table 210. Then, the application program 220 calculate a life percentage value 221 of the power supply 110 according to the expected life 111 a, the spent usage time 111 b and the decay coefficient 111, and calculates the residual usage time 222 of the power supply 110 according to the life percentage value 221.

In an embodiment, the intelligent device 200 reads the history data of the power supply 110 according to a preset time sequence (e.g. regularly at 22:00 every day). Alternatively, in another embodiment, the intelligent device 200 automatically accesses the history data of the power supply 110 before the selling system 100 is turned off. Alternatively, while the selling system 100 updates the history data of all electronic devices, the intelligent device 200 reads the updated history data of the power supply 110. Next, the history parameter table 210 of the intelligent device 200 is updated according to the updated history data 111. After the history parameter table 210 is updated, the application program 220 re-calculate the life percentage value 221 according to the updated history parameter table 210, and updates the residual usage time 222 of the power supply 110 according to the life percentage value 221. In other words, the electronic device reads the newest history data, and then the application program 220 calculates the newest residual usage time according to the history parameter table which stores the newest history data. Consequently, the newest residual usage time can be realized by the user.

FIG. 4 is a plot illustrating the relationship between the temperature and the decay coefficient of the power supply. In an embodiment, the life percentage value 221 is calculated according to the following mathematic formula (1):

$$Life \quad percentage \quad value = \sum_1^n \frac{spent \quad usage \quad time \times decay \quad coefficient}{\exp ected \quad lief} \quad (1)$$

In the mathematic formula (1), n is the number of times the history parameter table has been updated by the intelligent device. According to the mathematic formula (1), the summation of the product of the spent usage time of the electronic device and the decay coefficient is obtained to judge the current equivalent usage time of the electronic device.

$$Residual \ usage \ time = (1 - life \ percentage \ value) \times expected \ life \ (2)$$

As shown in the mathematic formula (1), the life percentage value 221 is obtained after the sum of the products of plural spent usage times 111b and plural decay coefficients 111c is divided by the expected life. The expected life is the expected use life when the power supply 110 leaves the factory. The decay coefficient 111c indicates the influence of the environmental condition of the operating electronic device on the expected life of the electronic device. For example, the decay coefficient 111 c is determined according to an operating temperature of the electronic device, an ambient temperature, an ambient humidity and/or a setting parameter of the electronic device. The spent usage time is determined according to the type of the electronic device. For example, the time length that the power supply 110 is electrically powered indicates the spent usage time of the power supply 110.

Please refer to FIG. 4 again. According to the relationship between the temperature and the decay coefficient of the power supply, it is found that the decay coefficient 111 c varies with the operating temperature. For example, the decay coefficient A corresponding to a low operating temperature (e.g., -10°C) is 1.1, the decay coefficient B corresponding to an operating temperature 20°C is 1.0, and the decay coefficient C corresponding to a high operating temperature (e.g., 50°C) is increased to 1.5. For example, the expected life of the power supply 110 is 2000 hours, and the number of times the history parameter table 210 has been updated is 8 (n=8). Moreover, the cumulative spent usage time 111 b from n=1 to n=8 is 80 hours, and the history parameter table 210 is periodically updated at a time interval of 10 hours. Moreover, the operating temperature is in the range between -10°C and 20°C. The decay coefficients corresponding to the operating temperatures of the eight updated history parameter tables 210 are 1.08, 1.05, 1, 1.09, 1, 1.01, 1.07 and 1.075, respectively. Consequently, the life percentage value 221 of the power supply 110 is calculated by the following mathematic formula:

$$\frac{10 \times 1.08 + 10 \times 1.05 + 10 \times 1 + 10 \times 1.09 + 10 \times 1 + 10 \times 1.01 + 10 \times 1.07 + 10 \times 1.075}{2000} = 0.041875$$

That is, the life percentage value 221 of the power supply 110 is 0.041875.

After the life percentage value is obtained, the residual usage time is calculated according to the mathematic formula (2):

$$(1 - 0.041875) \times 2000 = 1916.25$$

That is, the residual usage time 222 of the power supply 110 is 1916.25 hours.

As mentioned above, the residual usage time of the power supply 110 calculated by the conventional technology is 1920 hours, which is obtained by subtracting 80 hours from 2000 hours (i.e., the expected life). On the other hand, when the actual operating condition of the power supply 110 is taken into consideration according to the present invention, the residual usage time (i.e., 1916.25) can be accurately calculated.

In the above example, the decay coefficient of the power supply is associated with the operating temperature of the power supply. It is noted that the decay coefficient of the power supply may be associated with other setting parameters. For example, in addition to the operating temperature, the decay coefficient of the power supply is associated with the electronic components of the power supply. In fact, even if the power supplies in the same batch use the capacitors with the identical capacitance, the material specifications or qualities of the capacitors are different or inconsistent because these capacitors are possibly acquired from manufacturers. Under this circumstance, the relationships between the decay coefficient and the operating temperature for the power supplies in the same batch are possibly different. In other words, different power supplies have exclusive or respective decay coefficients.

Preferably but not exclusively, the decay coefficient is determined according to the operating temperature of the electronic device, the ambient temperature, the ambient humidity and/or the setting parameter of the electronic device. Please refer to FIG. 1 again. In case that the electronic device is the monitor, the spent usage time is the power-on time length of the monitor 120 and does not include standby time of the monitor 120. The decay coefficient of the monitor 120 is determined according to the operating temperature of the monitor 120, the ambient humidity and/or the setting parameter of the monitor 120. For example, the setting parameter of the monitor 120 includes the number of times the touch screen of the monitor 120 is clicked (or touched), a brightness value, the power consumption amount of the monitor 120, the material of the monitor 120 or a response time. Moreover, the actual use life of the monitor 120 is also influenced by the color compound of the monitor 120. That is, the monitor with a different color compound has different decay coefficient.

In case that the electronic device is the motherboard 140, the spent usage time is the power-on time length of the motherboard 140. The decay coefficient of the motherboard 140 is determined according to the operating temperature of the motherboard 140, the ambient temperature and/or the setting parameter of the motherboard 140. For example, the setting parameter of the motherboard 140 includes the voltage stability or the material conduction parameter. For example, if the motherboard 140 has a lead-containing material, the use life of the motherboard 140 is influenced. That is, the motherboard with the lead-containing material and the motherboard with the lead-free material have different decay coefficients.

In case that the electronic device is the hard disk drive 150, the spent usage time is the power-on time length of the hard disk drive 150, for example the power-on time length that the hard disk drive 150 is accessed. The decay coefficient of the hard disk drive 150 is determined according to the operating temperature of the hard disk drive 150 and/or the setting parameter of the hard disk drive 150. For example, the setting parameter of the hard disk drive 150 includes a hard disk rotation speed, the number of times the hard disk drive is access or a power consumption amount. For example, the number of times the data of the hard disk drive 150 is read, the number of times the hard disk drive 150 access data and the hard disk rotation speed of the hard disk drive 150 may directly influence the use life of the hard disk drive 150.

Moreover, in case that the electronic device is the printer 130, the spent usage time is the power-on time length of the printer 130. The decay coefficient of the printer 130 is determined according to the operating temperature of the printer 130 and/or the setting parameter of the printer 130. For example, the setting parameter of the printer 130 includes a voltage specification, a printing speed, a sensor usage time or a paper thickness. For example, in the components of the printer, the usage time of the printhead and the usage time of the rubber roller are important factors that influence the actual use life of the printer 130.

In the above embodiments, the method of the present invention can accurately acquire the residual usage time of the electronic device because the spent usage time and the decay coefficient corresponding to the electronic device are taken into consideration.

From the above descriptions, the present invention provides a method for calculating a life percentage of an electronic device. An intelligent device reads a history data of the electronic device, and calculates a life percentage value corresponding to the electronic device according to the history data. Consequently, a residual usage time of the electronic device can be acquired more accurately. Moreover, since the life percentage value is determined according to the decay coefficient of the electronic device, the important factor influencing the use life of the electronic device is taken into consideration. Consequently, the method of the present invention can facilitate the user to realize the residual usage time of the electronic device more accurately and can modify and update the residual usage time according to the decay coefficient of the electronic device at any time.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A method for calculating a life percentage of an electronic device, the electronic device having a history data, the method comprising steps of:

   (A) (S1)reading the history data(111), and generating a life percentage value(221) of the electronic device(110-150) according to the history data(111); and
   (B) (S2)calculating a residual usage time(222) of the electronic device(110-150) according to the life percentage value(221),

   **characterized in that** the history data(111) contains an expected life(111a), a spent usage time(111b) and a decay coefficient(111c) of the electronic device(110-150).

2. The method according to claim 1, **characterized in that** in the step (A), the history data(111) is read by an intelligent device(200) that is in communication with the electronic device(110-150), wherein when an application program(220) installed in the intelligent device(200) is executed, the life percentage value(221) is obtained according to the expected life(111a), the spent usage time(111b) and the decay coefficient(111c), and the residual usage time(222) of the electronic device(110-150) is calculated.

3. The method according to claim 2, **characterized in that** the history data(111) is stored in a history parameter table(210) of the intelligent device(200).

4. The method according to claim 3, **characterized in that** the intelligent device(200) reads the history data(111) of the electronic device(110-150) at regular time and updates the history parameter table(210) with the read history data(111); or after the history data(111) of the electronic device(110-150) is updated, the intelligent device(200) updates the history parameter table(210) according to the updated history data(111).

5. The method according to claim 4, **characterized in that** after the history parameter table(210) is updated, the intelligent device(200) re-calculates the life percentage value(221) of the electronic device(110-150) according to the updated history parameter table(210), so that the residual usage time(222) of the electronic device(110-150) is updated.

6. The method according to claim 4, **characterized in that** the life percentage value(221), the spent usage time(111b), the decay coefficient(111c) and the expected life(111a) comply with a mathematic formula:

$$Life \quad percentage \quad value = \sum_{1}^{n} \frac{spent \quad usage \quad time \times decay \quad coefficient}{\exp ected \quad lief} \quad ,$$

wherein n is a number of times the history parameter table(210) has been updated.

7. The method according to claim 1, **characterized in that** the residual usage time(222) and the life percentage value(221) comply with a mathematic formula:

Residual usage time = (1 − life percentage value) × expected life

8. The method according to claim 1, **characterized in that** the decay coefficient(111c) is determined according to an operating temperature of the electronic device(110-150), an ambient temperature, an ambient humidity and/or a setting parameter of the electronic device.

9. The method according to claim 1, **characterized in that** the expected life(111a) is an expected use life when the electronic device(110-150) leaves the factory.

10. The method according to claim 8, **characterized in that** the electronic device(110-150) is the motherboard(140), and the spent usage time(111b) is a power-on time length of the motherboard(140), wherein the decay coefficient(111c) is determined according to an operating temperature of the motherboard(140), an ambient temperature of the motherboard(140) and/or a setting parameter of the motherboard(140), wherein the setting parameter of the motherboard(140) includes a voltage stability or a material conduction parameter.

11. The method according to claim 8, **characterized in that** the electronic device(110-150) is the monitor(120), and the spent usage time(111b) is a power-on time length of the monitor(120), wherein the decay coefficient(111c) is determined according to an operating temperature of the monitor(120) and/or a setting parameter of the monitor(120), wherein the setting parameter of the monitor(120) includes a cumulative click number of the monitor(120), a brightness value, a power consumption amount of the monitor(120), a material of the monitor(120) or a response time.

12. The method according to claim 8, **characterized in that** the electronic device(110-150) is the hard disk drive(150), and the spent usage time(111b) is a power-on time length of the hard disk drive(150), wherein the decay coefficient(111c) is determined according to an operating temperature of the hard disk drive(150) and/or a setting parameter of the hard disk drive(150), wherein the setting parameter of the hard disk drive(150) includes a hard disk rotation speed, a number of times the hard disk drive(150) is access or a power consumption amount.

13. The method according to claim 8, **characterized in that** the electronic device(110-150) is a printer(130), and the spent usage time(111b) is a power-on time length of the printer(130), wherein the decay coefficient(111c) is determined according to an operating temperature of the printer(130) and/or a setting parameter of the printer(130), wherein the setting parameter of the printer(130) includes a voltage specification, a printing speed, a sensor usage time or a paper thickness.

14. The method according to claim 8, **characterized in that** the electronic device(110-150) is a power supply(110), and the spent usage time(111b) is a power-on time length of the power supply(110), wherein the decay coefficient(111c) is determined according to an operating temperature of the power supply(110) and/or the setting parameter of the power supply(110), wherein the setting parameter of the power supply(110) includes a capacitor material specification of the power supply(110).

FIG.1

─110

Power supply

─111

History data

─111a

Expected life

─111b

Spent usage time

─111c

Decay coefficient

S1 ─200

Intelligent device

─210

History parameter table

S2 ─220

Application program

─221

Life percentage value

─222

Residual usage time

FIG.2

Start

↓ S1

Read the history data

↓ S2

Generate the life percentage value and
acquire the residual usage time

↓

End

## FIG.3

Decay coefficient

## FIG.4

Europäisches
Patentamt

European
Patent Office

Office européen
des brevets

# EUROPEAN SEARCH REPORT

Application Number

EP 16 00 1226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/177613 A1 (CHAN HOI YEUNG [US] ET AL) 24 July 2008 (2008-07-24)<br>* paragraphs [0019], [0024], [0025], [0028], [0029], [0031] * | 1-14 | INV.<br>G06Q10/04<br>G06Q10/00 |
| X | US 2005/224577 A1 (ROZENBLAT GARY D [US] ET AL) 13 October 2005 (2005-10-13)<br>* paragraphs [0008] - [0011]; claims 1-28 * | 1-14 | |
| X | US 2015/281015 A1 (GRIFFITH DOUGLAS J [US] ET AL) 1 October 2015 (2015-10-01)<br>* paragraphs [0037], [0042], [0049] - [0053]; figure 1 * | 1-14 | |
| X | Anonymous: "3.2.2.4 BIOS Hardware Diagnostics and Monitoring",<br>,<br>5 September 2015 (2015-09-05), XP055290567,<br>Retrieved from the Internet:<br>URL:https://web.archive.org/web/2015090501 2311/http://www.chabotcollege.edu/faculty/ netacad/prot/ITE/course/module3/3.2.2.4/3. 2.2.4.html<br>[retrieved on 2016-07-22]<br>* the whole document * | 1-14 | TECHNICAL FIELDS SEARCHED (IPC)<br><br>G06Q |
| A | Anonymous: "S.M.A.R.T. - Wikipedia, the free encyclopedia",<br>,<br>18 November 2015 (2015-11-18), XP055290582,<br>Retrieved from the Internet:<br>URL:https://en.wikipedia.org/w/index.php?t itle=S.M.A.R.T.&oldid=691293588<br>[retrieved on 2016-07-22]<br>* Section ATA SMART attributes * | 12 | |

-/--

The present search report has been drawn up for all claims

| Place of search | Date of completion of the search | Examiner |
|---|---|---|
| Munich | 28 July 2016 | Flores Sanchez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 00 1226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "7 Tools to Monitor Your System Hardware - Raymond.CC", , 22 February 2014 (2014-02-22), XP055290599, Retrieved from the Internet: URL:https://web.archive.org/web/2014022220 2534/http://www.raymond.cc/blog/monitor-ha rdware-health-temperatures-voltages-and-fa n-speed/ [retrieved on 2016-07-22] * the whole document * ----- | 1-14 | |
| X | Anonymous: "View the time/date ranges that your computer was turned on", , 20 November 2015 (2015-11-20), XP055290610, Retrieved from the Internet: URL:https://web.archive.org/web/2015112002 2309/http://nirsoft.net/utils/computer_tur ned_on_times.html [retrieved on 2016-07-22] * figure 1 * ----- | 1-14 | |

TECHNICAL FIELDS
SEARCHED      (IPC)

The present search report has been drawn up for all claims

| Place of search | Date of completion of the search | Examiner |
|---|---|---|
| Munich | 28 July 2016 | Flores Sanchez, L |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 173 989 A1**

## ANNEX TO THE EUROPEAN SEARCH REPORT
## ON EUROPEAN PATENT APPLICATION NO.

EP 16 00 1226

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2016

| Patent document cited in search report | Publication date | Patent family member(s) | Publication date |
|---|---|---|---|
| US 2008177613 A1 | 24-07-2008 | NONE | |
| US 2005224577 A1 | 13-10-2005 | NONE | |
| US 2015281015 A1 | 01-10-2015 | NONE | |

EPO FORM P0459

For more details about this annex : see Official Journal of the European Patent Office, No. 12/82